# NEUE EUROPÄISCHE PATENTSCHRIFT

(11) **EP 1 387 975 B2**
(45) Veröffentlichungstag und Bekanntmachung des Hinweises auf die Entscheidung über den Einspruch: **17.09.2008**
(45) Hinweis auf die Patenterteilung: 15.09.2004
(21) Anmeldenummer: 02738049.2
(22) Anmeldetag: 10.05.2002
(51) Int. Cl.: F16K 37/00

(54) **VERFAHREN UND VORRICHTUNG ZUR STEUERUNG DER SCHALTBEWEGUNG EINES VENTILS**
METHOD AND DEVICE FOR CONTROLLING THE SWITCHING MOVEMENT OF A VALVE
PROCEDE ET DISPOSITIF DE COMMANDE DU MOUVEMENT DE COMMUTATION D'UNE SOUPAPE

(30) Priorität: 12.05.2001 DE 10123243
(43) Veröffentlichungstag der Anmeldung: 11.02.2004
(73) Patentinhaber: TUCHENHAGEN GmbH, 21514 Büchen (DE)
(72) Erfinder: COURA, Herbert, 21514 Büchen (DE); GESIKIEWICZ, Martin, 23562 Lübeck (DE); PORATH, Bernd, 23881 Breitenfelde (DE)
(74) Vertreter: Graalfs, Edo
(86) Internationale Anmeldenummer: PCT/EP2002/005135
(87) Internationale Veröffentlichungsnummer: WO 2002/093058

(56) Entgegenhaltungen:
- EP-A- 1 030 988
- WO-A-90/15948
- WO-A-95/17624
- WO-A-96/10731
- DE-C- 2 827 753
- DE-C- 3 108 778
- GB-A- 2 194 648
- US-A- 5 704 586
- Broschuere PD65496 DE1

## Beschreibung

### TECHNISCHES GEBIET

Die Erfindung betrifft ein Verfahren zur Steuerung der Schaltbewegung eines Ventils nach dem Oberbegriff des Anspruchs 1 sowie eine Vorrichtung zur Durchführung des Verfahrens nach dem Oberbegriff des Anspruchs 9.

### STAND DER TECHNIK

Mit einer bekannten Ventilsteuerung dieser Art kann die Position von Ventiltellern beispielsweise mit einer Genauigkeit von 0,1 mm erfasst werden (Zeitschrift **dei 1-2/2001, Seite 14**). Voraussetzung für diese Genauigkeit ist ein Sensorsystem, das vier unterschiedliche Erkennungspositionen ermöglicht.

In der US 5,704,586 ist eine Vorrichtung zur Steuerung eines Ventils beschrieben, bei der ein geradlinig arbeitender Stellungsanzeiger die jeweilige Stellung der Ventilstange erfasst und an eine Datenregistriereinrichtung übermittelt. Letztere steht in Verbindung mit einer Steuereinheit, welche wiederum Zugriff auf ein Magnetventil hat, welches in eine Zuleitung für Druckluft zum Antriebszylinder des Ventils eingreift. Die Ventilstange ist mit dem Schließglied des zugeordneten Ventils verbunden, so dass die Stellung des Ventils erfasst werden kann. Diese bekannte Vorrichtung führt die Überwachung der Ventilbewegung zwischen einer Anzahl von festen Ventilstellungen durch. Hierzu sind Mittel fürdie Speicherung diesergewünschten Ventilstellungen in einem Datenspeicher vorgesehen. Darüber hinaus weist die Vorrichtung Kontrolleinrichtungen auf für das Vergleichen der laufenden Stellungsanzeigen des Stellungsanzeigers mit den festen Schaltstellungen des Ventils, die in dem besagten Datenspeicher hinterlegt sind. Des weiteren verfügt die Steuerung über Programme, in welchen die Änderungen der Stellungsanzeigen für die festen Ventilstellungen während der wiederholten Ventilschaltungen hinterlegt sind, wobei die Programme jene Änderungen ausgleichen, die in einem Toleranzbereich der hinterlegten Stellungsanzeige liegen.

Eine derartige Anordnung hat den Vorteil, dass sich die Positionsanzeige im Rahmen des vorgegebenen Toleranzbereichs selbst justieren kann, so dass beispielsweise Einflüsse auf den Hub des Ventils infolge Temperaturänderung, Dichtungsverschleiß oder Änderung der Anströmrichtung des Schließgliedes, die beispielsweise zu einer veränderten Schließlage des Ventiltellers führen können, erkannt und kompensiert werden können (sog. Selbstjustierung).

Bei der herkömmlichen Technik werden beispielsweise die Schließ- und die Offenstellung des Ventils jeweils durch einen zugeordneten ortsfesten Stellungsmelder erfasst. Verändert sich nun beispielsweise durch die vorgenannten Einflussfaktoren die Schließlage des Ventiltellers und damit auch die der ursprünglichen Schließstellung zugeordnete Information, dann kann der ortsfest angeordnete Stellungsmelder eine derartige Veränderung nicht erkennen. Handelt es sich beispielsweise bei dem Stellungsmelder um einen sogenannten Mikroschalter, der mit einer ringförmigen Nut innerhalb der Ventilstange korrespondiert, dann wird die diesen Mikroschalter auslösende Nut in der ursprünglichen Schließlage ein Auslösesignal geben, obwohl das Ventil beispielsweise aufgrund eines Dichtungsverschleisses noch nicht vollständig geschlossen ist.

Mit der in der US 5,704,586 verankerten Grundsatzlösung zur Ventilsteuerung kann nunmehr im Zuge der sogenannten Selbstjustierung in bestimmten Zeitabständen das Schließglied und damit die mit diesem verbundene Ventilstange in die aktuell mögliche, ggf. durch die vorgenannten Einflussfaktoren veränderte Schließlage gefahren werden und das System zur Positionserfassung wird ggf. auf die nunmehr vorliegenden veränderten Schließbedingungen neu justiert.

Ein Sensorsystem, das einerseits mit einem berührungsfrei arbeitenden Positionsanzeiger arbeitet und das andererseits sich an verändernde Betriebsbedingungen des Ventils im Rahmen vordefinierter Toleranzbereiche anpassen kann, wird in einschlägigen Fachzeitschriften als sog. "schwebendes Messsystem" bezeichnet (vergleiche Zeitschrift **CIT/plus 4/01**, Seiten 42 bis 46; Zeitschrift **dei 1-2/2001**, Seite 14; Zeitschrift **Brauwelt Nr. 46147** (2000), Seiten 2018 bis 2023).

Mit der an den vorgenannten zitierten Literaturstellen beschriebenen Ventilsteuerung sind vier dort erwähnte unterschiedliche Erkennungspositionen des Ventils (feste Ventilstellungen) möglich. Neben den beiden Erkennungspositionen für die Schließ- und die Offenstellung des Ventils sind nun auch jene Positionen zu erkennen, in denen der Ventilsitz spaltweit über den einen oder den anderen Ventilteller zum Zwecke der sogenannten Sitzreinigung geöffnet wird, falls es sich bei dem zu steuernden Ventil um ein sogenanntes Doppelsitzventil handelt, das zwei relativ zueinander bewegliche Schließglieder aufweist, nämlich einen unabhängig angetriebenen Ventilteller und einen von diesem zwangsläufig und damit abhängig angetriebenen sog. Doppelteller.

Voraussetzung für die Realisierung eines sogenannten schwebenden Messsystems ist eine zuverlässig berührungsfrei, vorzugsweise geradlinig arbeitende Positionsanzeigevorrichtung. Eine derartige Vorrichtung ist beispielsweise aus der WO 96/10731 bekannt. Die dort als Positionsdetektionsvorrichtung bezeichnete Vorrichtung dient zur Bestimmung einer Position eines Elementes, wobei in Anwendung auf eine Ventilsteuerung der eingangs genannten Art dieses Element ein Ventilstößel mit einer Längsachse ist und dieser entlang seiner Längsachse beweglich ist. Ausweislich der zitierten Druckschrift ist an dem Element ein Magnet befestigt. Weiterhin ist eine Anordnung von mehreren Magnetfeldwandlern vorgesehen, die in einer geradlinigen Anordnung parallel und in Nachbarschaft zu der durch den Ventilstößel definierten Wegstrecke angeordnet sind, wobei jeder dieser vorzugsweise magnetoresistiven Feldwandler ein bipolares Ausgangssignal vorgibt, wenn sich der Magnet nähert, vorbeiläuft und sich von jedem Feldwandler wegbewegt. Die Anordnung von Feldwandlern gibt eine Vielzahl von Ausgangs-Signalwerten für eine Position des Magneten vor, die zur Bestimmung dieser Position und damit der Ventilstange, an der der Ventilstößel befestigt ist, herangezogen werden. Bei den Magnetfeldwandlern handelt es sich beispielsweise um Hallsensoren, die bei Änderung des Magnetfeldes eine dieser Änderung proportionale Spannungsänderung erzeugen. Durch die in der Druckschrift WO 96/10731 beschriebene Positionsdetektionsvorrichtung ist es möglich, ein der Ventilstößelbewegung proportionales elektrisches Ausgangssignal zu erzeugen, welches in einer Ventilsteuerung zur Positionserkennung nach Maßgabe der US 5,704,586 ausgewertet werden kann.

Bei der Vorrichtung zur Steuerung der Ventilbewegung zwischen einer Anzahl von festen Ventilstellungen gemäß US 5,704,586 werden die laufenden Stellungsmeldungen des Stellungsmelders mit den festen Stellungsmeldungen, die in dem Datenspeicher hinterlegt sind, miteinander verglichen. Dabei werden ggf. auftretende Änderungen berechnet und, soweit sie in einem vorgegebenen Toleranzbereich um eine hinterlegte feste Stellungsmeldung liegen, kompensiert. Dies bedeutet, dass das vorgegebene Toleranzfeld in Abhängigkeit von der festgestellten Änderung in einem vordefinierten begrenzten Umfang verschoben wird. Im Zusammenhang mit dieser Kompensation ist nicht eindeutig festzustellen, ob die festgestellten Änderungen durch zwischenzeitlich eingetretene tatsächliche Verschiebung der festen Ventilstellung (Endstellungen, Zwischenstellungen) hervorgerufen wurden oder ob es sich ganz oder teilweise um Änderungen im elektronischen Messsystem handelt. Es ist daher durchaus möglich, dass zwar Änderungen bei den aktuellen festen Ventilstellungen ermittelt werden, dass diese Änderungen jedoch nicht originär durch die Schließgliedposition in Bezug auf die zugeordnete Sitzfläche bedingt sind. Es ist demnach denkbar, dass eine Kompensation vorgenommen wird, ohne dass es hierfür hinreichende, durch die tatsächlichen Verhältnisse am Ventil gerechtfertigte Gründe gibt.

Vorrichtungen dieser Art sind bereits aus den Dokumenten GB 2194648 und WO 9015948 bekannt.

### ERFINDUNG

Ausgehend von der grundlegenden Lösung einerseits zur Ventilsteuerung gemäß US 5,704,586 und andererseits zur Positionsermittlung gemäß WO 96/10731 ist es Aufgabe der vorliegenden Erfindung, ein Verfahren zur Steuerung der Schaltbewegung eines Ventils zu schaffen, mit dem die Vorrichtung zu seiner Durchführung gegenüber bekannten Vorrichtungen vereinfacht, Handhabungsvorteile erreicht sowie die Erkennung definierter fester Ventilstellungen sicherer werden.

Diese Aufgabe wird durch ein Verfahren mit den Merkmalen des Anspruchs 1 gelöst. Vorteilhafte Ausgestaltungen des vorgeschlagenen Verfahrens sind Gegenstand der Unteransprüche. Eine Vorrichtung zur Durchführung des Verfahrens ist gekennzeichnet durch die Merkmale des Anspruchs 9. Vorteilhafte Ausführungsformen der vorgeschlagenen Vorrichtung sind Gegenstand der nachgeordneten Unteransprüche.

Der entscheidende Ansatz zur Erhöhung der Sicherheit bei der Erkennung der definierten festen Ventilstellungen besteht darin, dass diese Stellungen durch unmittelbare oder mittelbare Anlage der Ventilstange bzw. Ventilstangen an festen Stellungsbegrenzungen eindeutig bestimmt sind. Diese festen Stellungsbegrenzungen sind als metallische Anschläge ausgebildet. Dies bedeutet, dass sowohl in der Schließstellung des Ventils als auch in den anderen ausgezeichneten festen Ventilstellungen das unabhängig angetriebene Schließglied, der Ventilteller, eine metallische Anlage an der zugeordneten Stellungsbegrenzung (metallischer Anschlag) findet. Bei Vorrichtungen nach dem Stand der Technik ist dies beispielsweise nicht der Fall, da hier zumindest die Endlagenbegrenzung des Ventiltellers in der Schließstellung durch Auflage der mehr oder weniger duktilen, im Ventilteller angeordneten Sitzdichtung auf der zugeordneten Sitzfläche bestimmt wird. Auftretender Dichtungsverschleiß und Alterungsvorgänge verändern damit zwangsläufig die Schließstellung des Ventiltellers und erfordern bei Steuerungen nach dem Stand der Technik eine Selbstjustierung zumindest in dieser Erkennungsposition.

Das Einrichten der Steuerung im Zuge der erstmaligen Schaltbewegungen des Ventils wird durch die festen Stellungsbegrenzungen erleichtert, da diese jeweils angefahren und die hieraus jeweils resultierenden festen Stellungsmeldungen gespeichert werden. Im Zuge dieses sog. Set-up wird der Steuerung im Vorwege die Ausstattung des Ventils mitgeteilt. Aus dieser Ausstattung resultieren die möglichen festen Ventilstellungen. Dies bedeutet, dass ein wie auch immer ausgestattetes Ventil sich danach selbsttätig, automatisch einrichtet und hierzu die notwendigen Parameter aus dem in Frage kommenden Datenspeicher der Steuerung entnimmt und setzt. Dabei sind die einzelnen Fertigungstoleranzen der diversen Bauteile, aus denen sich ein Ventil üblicherweise zusammensetzt, im wesentlichen ohne Belang, da die jeweilige feste Stellungsmeldung aus der tatsächlich sich ergebenden jeweiligen End- oder Zwischenstellung abgegriffen und dem Set-up zu Grunde gelegt wird. Im Zuge des Set-up wird den festen Stellungsmeldungen jeweils ein vorgegebener Toleranzbereich zugewiesen, so dass aus den festen Stellungsmeldungen in Verbindung mit dem jeweiligen Toleranzbereich die beiden Grenzwerte dieses jeweiligen Toleranzbereichs berechnet werden können.

In diesem Zusammenhang wird weiterhin vorgeschlagen, dass im Datensatz, der in der Steuerung hinterlegt ist und der die jeweilige Ventilkonfiguration, deren Schaltbewegungen und Schaltalgorithmus kennzeichnet und überwacht, Toleranzbereiche ΔT₁ᵢ, ΔT₂ᵢ, ΔT₃ᵢ, ΔT₄ᵢ unterschiedlicher Gütegrade i = 1, 2, 3, ... enthalten sind, wobei jeder Gütegrad i eine Toleranzbereichgruppe ΔT₁₁, ΔT₂₁, ΔT₃₁, ΔT₄₁; ΔT₁₂, ΔT₂₂, ΔT₃₂, ΔT₄₂; ΔT₁₃, ΔT₂₃, ...; ΔT₁₄, ΔT₂₄, ... umfasst. Die vorgesehenen Gütegrade i tragen den verschiedenen Ventilarten und ihren Betriebs- und Arbeitsbedingungen Rechnung. Die Auswahl des in Frage kommenden Gütegrades i erfolgt vor der erstmaligen Schaltbewegung des Ventils und im Vorwege zur Ausführung des Set-up.

Im Gegensatz zu der vorstehend erwähnten Steuerung nach dem Stand der Technik verzichtet das vorgeschlagene Verfahren auf eine Kompensation festgestellter Änderungen für die festen Ventilstellungen. Es wird/werden lediglich während der nachfolgenden Schaltbewegungen des Ventils eine den aktuellen Endstellungen und/oder den aktuellen Zwischenstellungen jeweils zugeordnete aktuelle feste Stellungsmeldung y₁^{*}, y₂^{*}, y₃^{*}, y₄^{*} herangezogen und mit den beiden Grenzwerten y₁ₒ, y₁ᵤ; y₂ₒ, y₂ᵤ; ... des in Frage kommenden Toleranzbereichs ΔT₁ᵢ, ΔT₂ᵢ, ... verglichen. Aus der Berechnung der Grenzwerte und dem Vergleich dieser Grenzwerte mit den aktuellen festen Stellungsmeldungen kann auf einfache Art und Weise festgestellt werden, ob sich die aktuelle feste Ventilstellung innerhalb oder außerhalb des vorgegebenen Toleranzbereichs befindet. In diesem Zusammenhang wird weiterhin vorgeschlagen, dass bei Annäherung der aktuellen festen Stellungsmeldungen y₁^{*} bis y₄^{*} an die zugeordneten Grenzwerte y₁ₒ, y₁ᵤ; y₂ₒ, y₂ᵤ; ... und/oder beim Verlassen des zugeordneten Toleranzbereichs ΔT₁ᵢ, ΔT₂ᵢ, ... ein Schaft- und/oder Meldesignal generiert werden bzw. wird.

Gemäß einem weiteren Vorschlag sieht eine Ausgestaltung des Verfahrens vor, dass den festen Stellungsmeldungen y₁, y₂, y₃, y₄ eine Toleranzbereichgruppe zugeordnet ist. Dies bedeutet, dass jede dieserfesten Steilungsmeldungen mit einem Toleranzbereich gleichen Gütegrades i kombiniert wird. Ein weiterer Vorschlag sieht in diesem Zusammenhang vor, dass den festen Stellungsmeldungen y₁, y₂, y₃, y₄ jeweils Toleranzbereiche unterschiedlicher Gütegrade zugeordnet sind. Daraus folgt beispielsweise, dass der Schließstellung des Ventils ein enger bemessener Toleranzbereich zugeordnet ist als beispielsweise der weniger kritischen Offenstellung des Ventils.

Wenn abschätzbar ist, in welche Richtung Veränderungen der festen Stellungsmeldungen am wahrscheinlichsten sind, dann lässt sich mit Vorteil eine weitere Ausgestaltung des vorgeschlagenen Verfahrens anwenden, die vorsieht, dass der Toleranzbereich ΔT₁ᵢ, ΔT₂ᵢ, ΔT₃ᵢ, ΔT₄ᵢ, asymmetrisch und zugunsten der wahrscheinlichsten Veränderung der zugeordneten festen Stellungsmeldung y₁, y₂, y₃, y₄ zu letzterer angeordnet ist. Dies bedeutet in mathematischer Schreibweise, dass sich die jeweiligen Grenzwerte des vorgeschlagenen Toleranzbereichs folgendermaßen berechnen: y₁ₒ = y1 + ϕΔT₁ᵢ, y₁ᵤ = y₁-[1-ϕ]ΔT₁ᵢ, wobei der Anteilsfaktor ϕ einen Wert zwischen 0 und 1 annehmen kann.

Darüber hinaus wird weiterhin vorgeschlagen, das Verfahren dahingehend auszugestalten, dass der Toleranzbereich ΔT₁ᵢ, ΔT₂ᵢ, ΔT₃ᵢ, ΔT₄ᵢ symmetrisch zur zugeordneten festen Stellungsmeldung y₁, y₂, y₃, y₄ angeordnet ist. Damit liegen der obere Grenzwert y₁ₒ und der untere Grenzwert y₁ᵤ gleichweit von der festen Stellungsmeldung y₁ entfernt; der Anteilsfaktor beträgt ϕ = 0,5. Dies trifft gleichermaßen auch für die anderen festen Stellungsmeldungen y₂ bis y₄ zu (y₁ₒ = y₁ + ΔT₁ᵢ/2; y₁ᵤ = y₁ - ΔT₁ᵢ/2; ...).

Um die Annäherung der aktuellen festen Stellungsmeldung y₁^{*} bis y₄^{*} an die zugeordneten Grenzwerte des Toleranzbereichs, die eine Wartung des Ventils ratsam erscheinen lässt, klar zu definieren, wird gemäß einer weiteren Ausgestaltung des Verfahrens vorgeschlagen, dass eine Annäherung dann gegeben ist, wenn die aktuelle feste Stellungsmeldung y₁^{*} bis y₄^{*} in eine Annäherungstoleranz Δt_{w} eintritt, die innerhalb des jeweiligen Toleranzbereichsjeweils an die beiden Grenzwerte anschließt.

Die vorgeschlagene Vorrichtung zur Durchführung des Verfahrens zeichnet sich zum einen durch die bereits verfahrenstechnisch erwähnten festen Stellungsbegrenzungen A1 bis A4 aus, die als metallische Anschläge ausgebildet sind, sowie durch einen als berührungsfrei arbeitende Positionsanzeigevorrichtung ausgebildeten Stellungsmelder und durch einen Steuerkopf, der an der dem Ventil abgewandten Seite des Ventilantriebes angeordnet ist und der sämtliche zur Steuerung des Ventils notwendigen Mittel aufnimmt.

Eine vorteilhafte Ausführungsform sieht im Stellungsmelder eine als elektronische Unterbaugruppe ausgebildete Sensoreinheit vor, in der eine Anzahl ortsfester, magnetoresistiver Feldwandler in einer Reihenanordnung parallel und in Nachbarschaft zu einer zu erfassenden Ventilstangenbewegung angeordnet sind, wobei ein Magnet, verbunden mit der Ventilstange, entlang der Feldwandler verschiebbar ist. Eine derartige Sensoreinheit ist aus der WO 96/10731 bekannt. Neben der Sensoreinheit, die als gegenständliche Einheit ausgebildet ist, besteht der Stellungsmelder aus einer weiteren gegenständlichen Einheit, der sogenannten Kommunikationseinheit. Sensor- und Kommunikationseinheit sind über zwei Schnittstellen miteinander verbunden. Darüber hinaus weist die Sensoreinheit Steckanschlüsse für die Pilotventile auf. Die Kommunikationseinheit wird in die Sensoreinheit eingesteckt und enthält einen Mikroprozessor, einen Datenspeicher, ein internes Bedien- und Anzeigefeld, eine Signalanpassung sowie die gesamte für die Kommunikation mit einer speicherprogrammierbaren Steuerung erforderliche Elektronik und Software, Leuchtmelder und einen Schraubklemmenblock. Die Sensoreinheit ist für alle mit einem erfindungsgemäßen Steuerkopf ausrüstbare Ventilarten gleich, wobei die Kommunikationseinheit bestimmt, ob der Stellungsmelder insgesamt wechselstrom-, gleichstrom- oder buskompatibel ist.

Die vorgeschlagene Vorrichtung gestaltet sich in ihrem Aufbau einfach, wenn, wie dies ein weiterer Vorschlag vorsieht, im Steuerkopf ein Installationsblock vorgesehen ist, der das gesamte Verteilungssystem für das Druckmittel in sich aufnimmt sowie die Pilotventile zur Steuerung des Druckmittels und den aus der Sensorund der Kommunikationseinheit bestehenden Stellungsmelder trägt.

In diesem Zusammenhang sieht eine weitere Ausführungsform vor, dass der Installationsblock für die höchste Ausbaustufe (maximale Ausstattung) der Steuerung eines Ventils und damit für ein Ventil mit allen optional möglichen Ausstattungsvarianten ausgeführt ist. Dies bedeutet, dass sämtliche Kanäle für die Zufuhr und die entsprechende Abfuhr von Druckmittel (Steuerluft) sowie weitere Verbindungskanäle in diesem Installationsblock angeordnet sind.

Zur elektrischen und/oder elektronischen Realisierung der unterschiedlichen Ausstattungsvarianten der Steuerung des Ventils, nämlich vom einfachsten Ventil mit einer Schließ- und einer Offenstellung, die stellungsmäßig zu detektieren sind, über ein Doppelsitzventil mit Sitzreinigung an jedem der beiden Schließglieder, ggf. in Verbindung mit einer sich wiederholenden Öffnungs- und Schließbewegung im Zuge der Sitzreinigung, bis zur Zusatzbelastung des Antriebskolbens für den Vollhub wird vorgeschlagen, die elektrische und elektronische Schaltungsanordnung entsprechend modular aufzubauen und die einzelnen Ausbaustufen der Schaltungsanordnung jeweils durch Aufstecken entsprechender modularer Bauteile zu verwirklichen. Zu diesem Zweck ist der Installationsblock für den Anschluss von drei Pilotventilen ausgerüstet, so dass neben der Ansteuerung des Vollhubes durch ein erstes Pilotventil zwei weitere Pilotventile zur Realisierung der beiden Zwischenstellungen (erster und zweiter Lifthub) angeordnet werden können. Die Steuerung ist dabei derart ausgestattet, dass unterschiedliche Versorgungsspannungen (Gleich- oder Wechselspannung unterschiedlicher Größe) an die Steuerung herangeführt werden können, ohne dass dieser jeweilige Sachverhalt zu einem Austausch des Pitotventils bzw. der Pilotventile führt. Die Spannungswandlung und Anpassung auf die durch das verwendete Pilotventil determinierte Spannung erfolgt in vorteilhafter Weise selbsttätig.

Gemäß einem weiteren Vorschlag wird das Druckmittel zur Ansteuerung des Ventilantriebes zur Erzeugung des Vollhubes dem Ventilantrieb von außen über einen ersten Druckmittelanschluss zugeführt.

Der vorstehend genannte externe erste Druckmittelanschluss kann entfallen, wenn das Druckmittel, wie dies ein weiterer Vorschlag vorsieht, über eine Ventilstangenbohrung in der Ventilstange geführt ist. Diese Ventilstangenbohrung mündet am Ende der Ventilstange, wo auch der Magnet des Stellungsmelders angeordnet ist, in ein zur Umgebung hin geschlossenes Kammergehäuse aus, das vom Druckmittel für den Ventilantrieb beaufschlagt ist. Eine derartige Anordnung führt zu einer Vereinfachung der Vorrichtung, da der externe Druckmittelanschluss am Steuerkopf und der üblicherweise außerhalb des Antriebes vom Steuerkopf zum Antriebszylinder verlegte Schlauch für die Zufuhr von Druckmittel entfallen.

Eine weitere Ausgestaltung der vorgeschlagenen Vorrichtung sieht vor, dass der Stellungsmelder mit mehr als einem Leuchtmelder unterschiedlicher Farbgebung ausgestattet ist, wobei die Leuchtmelder über eine Streulichtlinse, die in der geschlossenen Stirnseite einer den Steuerkopf verschließenden Abdeckhaube angeordnet ist, rundum (360 Grad) sichtbar sind, so dass die jeweilige Funktion des Ventils von allen Seiten wahrgenommen werden kann. Mittels der Leuchtmelderwerden die unterschiedlichen Schaltzustände (Schließstellung, Offenstellung, Sitzreinigungsstellung), Fehlermeldungen, Wartungsnotwendigkeit, Ventilstörungen oder Einrichtfunktionen (Set-up) angezeigt. Diese Leuchtmelder, vorzugsweise drei Leuchtmelder beispielsweise der Farbe grün, gelb, rot, die dauernd oder blinkend leuchten, sind am Kopf der Kommunikationseinheit angeordnet.

Darüber hinaus sieht ein weiterer Vorschlag vor, dass der Ventilantrieb einen vierten Druckmittelanschluss aufweist, über den in der Schließstellung des Ventils die Schließkraft auf die Ventilstange durch Zufuhr von Druckmittel erhöht wird. Die Ansteuerung dieses vierten Druckmittelanschlusses erfolgt über ein sogenanntes NICHT-Element, das auf dem Installationsblock angeordnet ist und mit dem im Bedarfsfall, wenn der Antriebskolben für den Vollhub nicht angesteuert ist, Druckmittel wahlweise auf die rückwärtige Seite des Antriebskolbens für den Vollhub zur Unterstützung der dort wirkenden Federkraft geleitet werden kann.

### KURZBESCHREIBUNG DER ZEICHNUNGEN

Ein Ausführungsbeispiel der Vorrichtung, mit der das vorgeschlagene Verfahren zur Steuerung der Schaltbewegung eines Ventils erläutert wird, ist in der Zeichnung dargestellt und wird nachfolgend hinsichtlich Aufbau und Funktion beschrieben. Es zeigen
- **Figur 1**: in schematischer Darstellung eine erfindungsgemäße Vorrichtung zur Steuerung der Schaltbewegung eines sogenannten Doppelsitzventils;
- **Figur 2**: eine Darstellung der beiden Endstellungen und der beiden Zwischenstellungen der Ventilstangen eines Doppelsitzventils gemäß Figur 1 in Verbindung mit den zugeordneten Toleranzbereichen und einer Annäherungstoleranz (beispielhaft dargestellt für die Offenstellung y₂);
- **Figur 3**: eine Teilansicht des Steuerkopfes (linksseitig) und einen Längsschnitt (rechtsseitig) durch diesen u.a. im Bereich der Ventilstange und dem diese umgebenden Kammergehäuse entsprechend einem in **Figur 4** mit C-C gekennzeichneten Schnittverlauf;
- **Figur 4**: eine Draufsicht auf den von seiner Abdeckhaube befreiten Steuerkopf;
- **Figur 5**: eine perspektivische Ansicht des Steuerkopfes von der Seite der Pilotventile, wobei die Abdeckhaube angehoben ist und einen Blick auf die Pilotventile und den Stellungsmelder freigibt und
- **Figur 6**: eine Perspektive des Installationsblockes von der Seite der Anschlüsse für die Pilotventile und vom Ventilantrieb aus gesehen.

### BEZUGSZEICHENLISTE DER VERWENDETEN ABKÜRZUNGEN

- 1: Steuerkopf
- 1a: Gehäuseunterteil
- 2: Installationsblock
- 2a: Kammergehäuse
- 2b: Befestigungsteil
- 3, 101a: Ventilstange
- 3a: Längsachse
- 3b: Ventilstangenbohrung
- 4: Magnet
- 5: Stellungsmelder
- 5.1: Sensoreinheit
- 5.1a: Magnetfeldwandler (Hallsensoren)
- 5.1b: Befestigungsnut
- 5.2: Kommunikationseinheit
- 6: Multiplexer
- 7: A/D-Wandler
- 8: Mikroprozessor
- 8a: Datenspeicher
- 8b: internes Bedien- und Anzeigefeld
- 8c: Signalanpassung
- 8d: erste Schnittstelle
- 8e: zweite Schnittstelle
- 8f: Klemmenleiste
- 8g: Anschluss für Parametrierungsgerät
- 8h: Anschluss für Pilotventile
- 9: erstes Pilotventil (Hauptantrieb)
- 9.1: erster Anschluss
- 10: zweites Pilotventil (erster Liftantrieb)
- 10.1: zweiter Anschluss
- 11: drittes Pilotventil (zweiter Liftantrieb)
- 11.1: dritter Anschluss
- 12: Leuchtmelder
- 13.1: erste Gruppe Druckmittelanschlüsse
- 13.2: zweite Gruppe Druckmittelanschlüsse
- 14.1: erster Anschluss für Steuer- und Signalverarbeitungsleitungen
- 14.2: zweiter Anschluss für Steuer- und Signalverarbeitungsleitungen
- 15: NICHT-Element (Zusatzkraft, schließend: Hauptantrieb)
- 15.1: vierter Anschluss
- 16: Zufuhrkanal-System
- 16*: zweites Zufuhrkanal-System
- 16a: erster Zufuhrkanal-Abschnitt
- 16b: zweiter Zufuhrkanal-Abschnitt
- 16c: dritter Zufuhrkanal-Abschnitt
- 16.11: Zufuhranschluss
- 16.12: Zufuhrkanal-Verbindungsstelle
- 17: erstes Druckmittelkanal-System
- 17a: erster Druckmittelkanal-Abschnitt
- 17b: zweiter Druckmittelkanal-Abschnitt
- 17c: dritter Druckmittelkanal-Abschnitt
- 17d: vierter Druckmittelkanal-Abschnitt
- 17.11: erste Druckmittel-Verbindungsstelle
- 17.12: erster Druckmittel-Anschluss
- 17.21: zweite Druckmittel-Verbindungsstelle
- 17.22: zweiter Druckmittel-Anschluss
- 17.31: dritte Druckmittel-Verbindungsstelle
- 17.32: dritter Druckmittel-Anschluss
- 18: Abfuhrkanal-System
- 18a: erster Abfuhrkanal-Abschnitt
- 18b: zweiter Abfuhrkanal-Abschnitt
- 18c: dritter Abfuhrkanal-Abschnitt
- 18.11: Abfuhrkanal-Verbindungsstelle
- 18.12: Abfuhrkanal-Anschluss
- 19: zweites Druckmittelkanal-System
- 19.11: vierte Druckmittel-Verbindungsstelle
- 19.12: vierter Druckmittel-Anschluss
- 20: Rückschlagventil-Anschluss
- 21: Abdeckhaube
- 21a: Streulichtlinse
- 22: Verbindungselement
- 100: Ventil
- 100a: erstes Ventilgehäuse
- 100b: zweites Ventilgehäuse
- 101: Ventilteller
- 101a, 3: Ventilstange
- 101b: erster Mitnehmer
- 102: Doppelteller
- 102a: Hohlstange
- 102b: zweiter Mitnehmer
- 103: erste Sitzfläche
- 104: zweite Sitzfläche
- 105: Ventilantrieb
- 105a: Hauptkolben (Hauptantrieb)
- 105b: erster Liftkolben (erster Liftantrieb)
- 105c: zweiter Liftkolben (zweiter Liftantrieb)
- 106a: erster Druckmittelanschluss
- 106b: zweiter Druckmittelanschluss
- 106c: dritter Druckmittelanschluss
- 106d: vierter Druckmittelanschluss
- 107: erste Sitzdichtung
- 108: zweite Sitzdichtung
- A: Druckmittel-Abfuhr
- A1: erste Stellungsbegrenzung (erster metallischer Anschlag)
- A2: zweite Stellungsbegrenzung (zweiter metallischer Anschlag)
- A3: dritte Stellungsbegrenzung (dritter metallischer Anschlag)
- A4: vierte Stellungsbegrenzung (vierter metallischer Anschlag)
- B: Bezugssystem
- D: Druckmittel
- DS: Datensatz
- H: Vollhub
- N: magnetischer Nordpol
- S: magnetischer Südpol
- SL1: Steuerluft für ersten Lifthub
- SL2: Druckmittel für zweiten Lifthub
- SV: Druckmittel für Vollhub (extern)
- SZ: Druckmittel für Zusatzbelastung
- Z: Druckmittel-Zufuhr
- ΔT₁ᵢ: Toleranzbereich für die zugeordnete feste Stellungsmeldung y₁
- ΔT₂ᵢ: Toleranzbereich für die zugeordnete feste Stellungsmeldung y₂
- ΔT₃ᵢ: Toleranzbereich für die zugeordnete feste Stellungsmeldung y₃
- ΔT₄ᵢ: Toleranzbereich für die zugeordnete feste Stellungsmeldung y₄
- i: Gütegrade
- Δt_{w}: Annäherungstoleranz
- y: Stellungsmeldung
- y₁: erste feste Stellungsmeldung (erste Endstellung: Schließstellung)
- y₂: zweite feste Stellungsmeldung (zweite Endstellung: Offenstellung)
- y₃: dritte feste Stellungsmeldung (Zwischenstellung des Ventiltellers: erster Lifthub)
- y₄: vierte feste Stellungsmeldung (Zwischenstellung des Doppeltellers: zweiter Lifthub)
- y₁*: erste aktuelle feste Stellungsmeldung
- y₂*: zweite aktuelle feste Stellungsmeldung
- y₃*: dritte aktuelle feste Stellungsmeldung
- y₄*: vierte aktuelle feste Stellungsmeldung
- y₁^{*w} bis ... y₄^{*w}: Wartungsmeldung für y₁^{*} bis y₄^{*}
- y₁^{*s} bis ... y₄^{*s}: Störungsmeldung für y₁^{*} bis y₄^{*}
- y₁ₒ, y₁ᵤ: Grenzwerte des Toleranzbereichs ΔT₁ᵢ
- y₂ₒ, y₂ᵤ: Grenzwerte des Toleranzbereichs ΔT₂ᵢ
- y₃ₒ, y₃ᵤ: Grenzwerte des Toleranzbereichs ΔT₃ᵢ
- y₄ₒ, y₄ᵤ: Grenzwerte des Toleranzbereichs ΔT₄ᵢ
- ϕ: Anteilsfaktor

### DETAILLIERTE BESCHREIBUNG

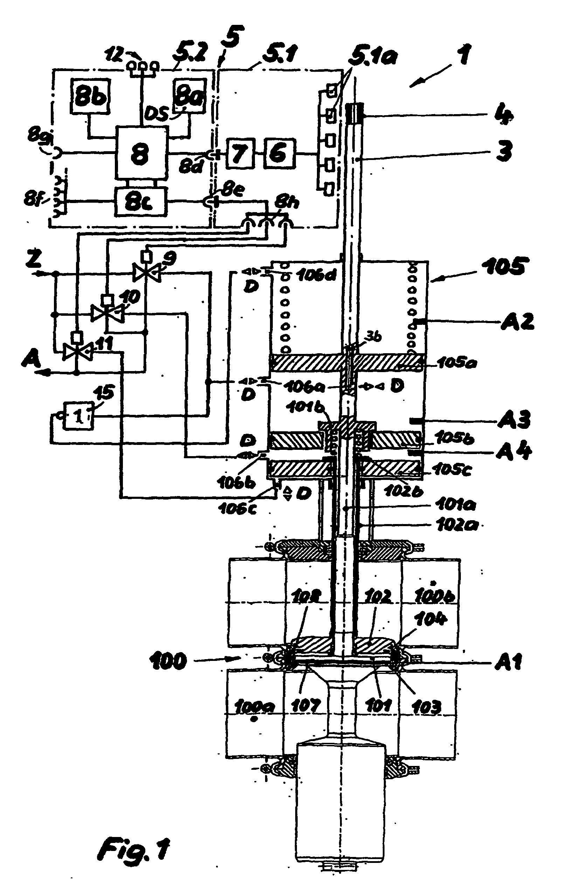

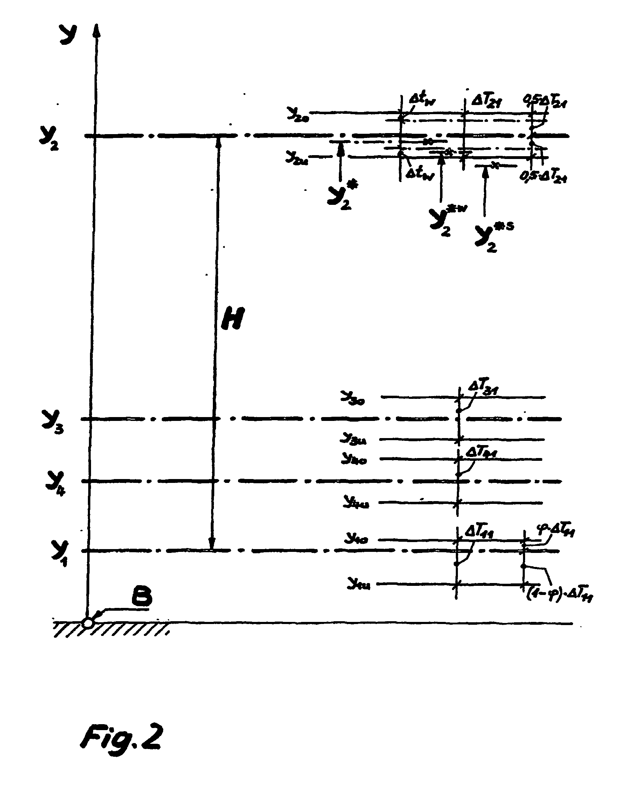

Die erfindungsgemäße Vorrichtung ist in **Figur 1** in Anwendung auf ein Ventil 100 dargestellt, das als sog. Doppelsitzventil ausgebildet ist und das zwischen einem ersten und einem zweiten Ventilgehäuse 100a bzw. 100b einen Ventilteller 101 und einen Doppelteller 102 aufnimmt. Der Ventilteller 101 erfährt seinen unabhängigen Antrieb über eine Ventilstange 101a, und er kommt bei seiner Öffnungsbewegung an Doppelteller 102 zur Anlage und überführt diesen gleichfalls in die Offenstellung. Der Ventilteller 101 wirkt über eine erste Sitzdichtung 107 mit der ersten Sitzfläche 103 zusammen, und dem mit einer zweiten Sitzdichtung 108 ausgestatteten Doppelteller 102 ist eine zweite Sitzfläche 104 zugeordnet. Beide Schließglieder 101,102 steuern eine nicht bezeichnete Verbindungsbohrung zwischen dem ersten und dem zweiten Ventilgehäuse 100a bzw. 100b. Der Ventilteller 101 verfügt über eine erste feste Ventilstellung y₁ (**Figur 2**), die dargestellte Schließstellung, und eine zweite feste Ventilstellung y₂, die Offenstellung. Zwischen diesen beiden festen Ventilstellungen, den Endstellungen, wird ein sog. Vollhub H des Ventiltellers 101 ausgebildet. Zur Realisierung dieses Vollhubes H wird in einem Ventilantrieb 105 ein über die Ventilstange 101a mit dem Ventilteller 101 verbundener Hauptkolben 105a mit Druckmittel D über einen ersten Druckmittelanschluss 106a entweder von außen oder über eine Ventilstangenbohrung 3b von innen beaufschlagt. Zum abhängigen Vollzug des Vollhubes H ist der Doppelteller 102 auf die Mitnahme durch den Ventilteller 101 angewiesen. In diesem Zusammenhang hat seine als Hohlstange 102a ausgebildete Ventilstange lediglich Führungsfunktion. Die definierte Endlagenbegrenzung des Ventiltellers 101 und des Doppeltellers 102 in der jeweiligen Schließstellung erfolgt über eine metallische Anlage auf der jeweils zugeordneten Sitzfläche 103 bzw. 104, d.h. letztere bilden die feste Stellungsbegrenzung A1 (erster metallischerAnschlag). Die Offenstellung des Ventiltellers 101 und damit auch des Doppeltellers 102, die zweite Endstellung, die die zweite feste Stellungsmeldung y₂ liefert, wird beispielsweise, wie dies in **Figur 1** schematisch dargestellt ist, durch Anlage des Hauptkolbens 105a an einer zweiten Stellungsbegrenzung A2 (zweiter metallischer Anschlag) realisiert.

Über einen ersten Liftkolben 105b im Ventilantrieb 105 wird der Ventilteller 101 in eine Teiloffenstellung zum Zwecke seiner Sitzreinigung überführt. Diese Teitoffenstellung oder Zwischenstellung liefert die dritte feste Stellungsmeldung y₃. Die eindeutige Endlagenbegrenzung für diese Zwischenstellung findet der erste Liftkolben 105b an einer dritten festen Stellungsbegrenzung A3, wobei die Mitnahme der Ventilstange 101a durch den ersten Liftkolben 105b über einen an der Ventilstange 101a ausgebildeten ersten Mitnehmer 101b erfolgt (dritter metallischer Anschlag). Zur Druckmittelbeaufschlagung des ersten Liftkolbens 105b dient ein zweiter Druckmittelanschluss 106b.

Über einen zweiten Liftkolben 105c, der über einen zweiten Mitnehmer 102b an der Hohlstange 102a angreift, lässt sich der Doppelteller 102 in eine Teiloffenstellung und damit eine Zwischenstellung überführen, in der seine Sitzreinigung möglich ist. Hierzu wird der zweite Liftkolben 105c über einen dritten Druckmittelanschluss 106c mit Druckmittel D beaufschlagt. Diese Zwischenstellung, die die vierte feste Stellungsmeldung y₄ liefert, wird durch die vierte Stellungsbegrenzung A4 begrenzt (vierter metallischer Anschlag).

Die vorstehend beschriebenen möglichen Schaltbewegungen des Doppelsitzventils stellen das maximal mögliche Bewegungsspektrum dar, das die erfindungsgemäße Steuerung bewältigen muss. Darüber hinaus ist weiterhin vorgesehen, den Ventilteller 101 im nicht angesteuerten Zustand mittels einer Zusatzkraft auf seine Sitzfläche 103 zu pressen. Hierzu wird über einen vierten Druckmittelanschluss 106d der Hauptkolben 105a auf der rückwärtigen Seite mit Druckmittel D beaufschlagt.

Zur Beschickung der Druckmittelanschlüsse 106a bis 106c sind ein erstes Pilotventil 9, ein zweites Pilotventil 10 und ein drittes Pilotventil 11 vorgesehen. Die Ansteuerung des vierten Druckmittelanschlusses 106d erfolgt über ein sog. NICHT-Element 15, das im Bedarfsfalle und immer dann, wenn keine Ansteuerung des Hauptkolbens 105a über den ersten Druckmittelanschluss 106a vorliegt, eine Ansteuerung erfährt. Im oberen Teil der Darstellung von Figur 1 ist die erfindungsgemäße Steuerung schematisch dargestellt, deren Aufgabe es u.a. ist, die vorgenannten Pilotventile 9, 10 und 11 anzusteuern, damit die vorstehend beschriebenen Schaltbewegungen des Doppelsitzventils durchführbar sind. Mit Z ist die Druckmittel-Zufuhr und mit A ist die Druckmittel-Abfuhr bezeichnet.

Die zum Ventilteller 101 führende Ventilstange 101a setzt sich oberhalb des Hauptkolbens 105a in einer Ventilstange 3 fort, die in einen Steuerkopf 1 hineingeführt ist und dort an ihrem Ende einen Magneten 4 trägt. Der Steuerkopf 1 umfasst u.a. einen Stellungsmelder 5, der wiederum aus einer Sensoreinheit 5.1 und einer Kommunikationseinheit 5.2 besteht. In der Sensoreinheit 5.1 sind eine Anzahl ortsfester Magnetfeldwandler 5.1a (vorzugsweise magnetoresistive Feldwandler) in einer Reihenanordnung parallel und in Nachbarschaft zu der Ventilstange 3 angeordnet, wobei der Magnet 4 synchron mit der Ventilstange 3, entlang der Magnetfeldwandler 5.1a verschiebbar ist. Bei den Magnetfeldwandlern 5.1a handelt es sich beispielsweise um sog. Hallsensoren, die ein bipolares Ausgangssignal vorgeben, wenn sich der Magnet 4 nähert, vorbeiläuft und sich von jedem Magnetfeldwandler 5.1a weg bewegt.

Die Auswertung des die Magnetfeldwandler 5.1a durchsetzenden magnetischen Feldes zum Zwecke der Positionserfassung der Ventilstange 3 ist beispielsweise in der WO 96/10731 beschrieben. Die Ausgangssignale der Magnetfeldwandler 5.1a können seriell oder parallel erhalten werden. Um den Leistungsverbrauch auf ein Minimum zu bringen, können die Magnetfeldwandler 5.1a mit einem Multiplexer 6 verdrahtet sein, wodurch die Daten seriell zu erhalten sind. Sie werden einem A/D-Wandler 7 zugeführt, der über einen Mikroprozessor 8 mit einem Datenspeicher 8a verbunden ist. Mikroprozessor 8 und Datenspeicher 8a sowie ein internes Bedien- und Anzeigefeld 8b, eine Signalanpassung 8c, eine Klemmenleiste 8f und ein Anschluss für ein Parametrierungsgerät 8g befinden sich in der Kommunikationseinheit 5.2, die über eine erste Schnittstelle 8d und eine zweite Schnittstelle 8e mit der Sensoreinheit 5.1 verbunden ist. Ausgehend von der Signalanpassung 8c ist Ober die zweite Schnittstelle 8e eine elektrische Versorgung eines Anschlusses 8h für die Pilotventile 9, 10 und 11 sichergestellt.

Mit der vorstehend hinsichtlich ihres grundsätzlichen Aufbaus beschriebenen erfindungsgemäßen Steuerung werden im Zuge der erstmaligen Schaltbewegung des Doppelsitzventils 100 die festen Stellungsbegrenzungen A1 bis A4 jeweils angefahren, und die hieraus jeweils resultierenden festen Stellungsmeldungen y₁ bis y₄, gemessen mit der in der Sensoreinheit 5.1 enthaltenen Wegmesseinrichtung 4, 5.1a, werden im Datenspeicher 8a gespeichert. Diesen festen Stellungsmeldungen y₁ bis y₄ wird jeweils ein im Datenspeicher 8a in einem vordefinierten Datensatz DS vorgegebener Toleranzbereich ΔT₁ᵢ bis ΔT₄ᵢ zugewiesen und daraus errechnet der Mikroprozessor 8 die beiden Grenzwerte y₁ₒ, y₁ᵤ bis y₄ₒ, y₄ᵤ des jeweiligen Toleranzbereichs ΔT₁ᵢ bis ΔT₄ᵢ. Während der nachfolgenden Schaltbewegungen des Doppelsitzventils 100 werden laufend die aktuellen Endstellungen und ggf. auch die aktuelle Zwischenstellung der Ventilstange 3 und der Hohlstange 102a gemessen und die jeweils zugeordnete aktuelle feste Stellungsmeldung y₁^{*} bis y₄^{*} wird herangezogen und mit den beiden Grenzwerten y₁ₒ, y₁ᵤ bis y₄ₒ, y₄ᵤ des in Frage kommenden Toleranzbereichs ΔT₁ᵢ bis ΔT₄ᵢ verglichen. Hierbei ist anzumerken, dass bei der dargestellten Ausführungsform des Doppelsitzventils 100 die Hohlstange 102a des Doppeltellers 102 nicht bis in den Steuerkopf 1 und somit in den Bereich der Wegmesseinrichtung 4, 5.1a hineingeführt ist, so dass die Zwischenstellung y₄ der Hohlstange 102a dort nicht erfasst werden kann. Im vorliegenden Falle wird diese Zwischensteliung über einen nicht dargestellten Sensor erfasst, der zwischen dem zweiten Ventilgehäuse 100b und dem Ventilantrieb 105 angeordnet ist.

Die vorstehend beschriebenen festen Stellungsmeldungen y₁ bis y₄, erhalten durch die mittels der Wegmesseinrichtung 4, 5.1a generell gelieferten Stellungsmeldungen y, sind in Verbindung mit den diesen zugewiesenen vorgegebenen Toleranzbereichen ΔT₁ᵢ bis ΔT₄ᵢ in **Figur 2** bildlich dargestellt. Am Beispiel der festen Stellungsmeldung y₂ (Offenstellung) ist die symmetrische Lage des Toleranzbereichs ΔT₂₁ in Bezug auf die feste Stellungsmeldung y₂ gezeigt, wobei als Gütegrad hier beispielhaft i = 1 festgelegt wurde. Der festen Stellungsmeldung y₁ (Schließstellung) ist mit ebenfalls Gütegrad i = 1 der Toleranzbereich ΔT₁₁ asymmetrisch zugeordnet, wobei sich der obere Grenzwert zu y₁ₒ = y₁ + ϕΔT₁₁ und der untere Grenzwert zu y₁ᵤ = y₁ - [1-ϕ]ΔT₁₁ ergibt und der Anteilsfaktor ϕ zwischen 0 und 1 liegen kann. Bei symmetrischer Aufteilung des Toleranzbereichs nimmt ϕ den Wert ½ an, so dass der obere und der untere Grenzwert (siehe die feste Stellungsmeldung y₂) gleichweit von dieser festen Stellungsmeldung y₂ entfernt ist.

Am Beispiel der Offenstellung y₂ des Doppelsitzventils 100 ist in **Figur 2** dargestellt, wie die erfindungsgemäße Steuerung die Endstellungen und damit sinngemäß auch die Zwischenstellungen überwacht. Für die aktuelle Offenstellung y₂ wird beispielsweise die aktuelle feste Stellungsmeldung y₂^{*} ermittelt und dieser Messwert, bezogen auf ein Bezugssystem B, wird mit den in Frage kommenden Grenzwerten y₂ₒ und y₂ᵤ verglichen. Solange sich der Messwert y₂^{*} innerhalb des Toleranzbereichs ΔT₂₁ befindet, aber außerhalb einer in diesem Toleranzbereich beiderseits platzierten Annäherungstoleranz Δt_{w}, hat das Doppelsitzventil 100 eine ordnungsgemäße Offenstellung erreicht. Dies kann beispielsweise durch ein optisches Meldesignal über einen der am Steuerkopf 1 angeordneten Leuchtmelder 12 (s. **Figur 1**) angezeigt werden. Bei Annäherung der Stellungsmeldung y₂^{*} an einen der beiden Grenzwerte y₂ₒ, y₂ᵤ innerhalb der Annäherungstoleranz Δt_{w} wird seitens der Steuerung ein Schaft- und/oder Meldesignal generiert, das beispielsweise zu einer Wartung auffordert (Wartungsmeldung y₁^{*w} bis y₄^{*w}). Verlässt die Stellungsmeldung y₂^{*} den zugeordneten Toleranzbereich ΔT₂₁, dann wird ein als Störung zu interpretierendes Schalt- und/oder Meldesignal generiert (Störungsmeldung y₁^{*s} bis y₄^{*s}).

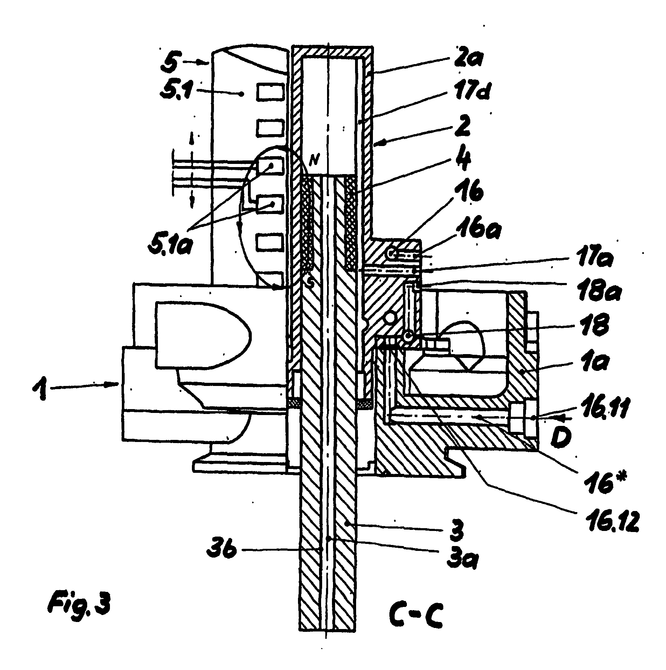

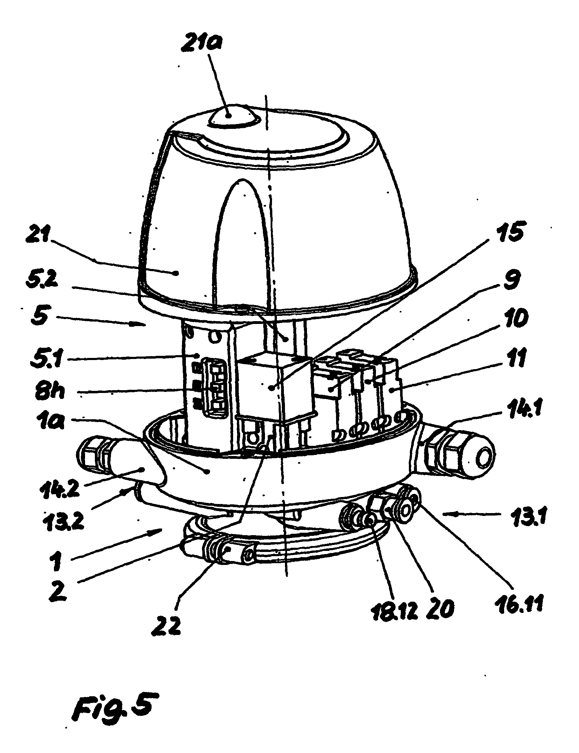

Die Vorrichtung zur Steuerung der Schaltbewegung eines Ventils umfasst in dem Steuerkopf 1, der außenseits von einem Gehäuseunterteil 1a (**Figur 3**) und einer diesen verschließenden, nicht dargestellten Abdeckhaube 21 gebildet wird (s. Figur 5), einen von der Ventilstange 3 durchdrungenen Installationsblock 2. An letzterem ist ein topfförmiges Kammergehäuse 2a dergestalt angeordnet, dass das Ende der Ventilstange 3 in diesem, allseits berandet und gegenüber der Umgebung hermetisch abgegrenzt, Anordnung findet. Am Ende der Ventilstange 3 ist wenigstens ein Magnet 4 befestigt, der vorzugsweise ringzylindrisch ausgebildet und mit seiner Längsachse konzentrisch zur Längsachse 3a der Ventilstange 3 angeordnet ist. Das Feld des Magneten 4 breitet sich räumlich, axialsymmetrisch zur Längsachse 3a aus, wobei die durch die beiden Pole N, S des magnetischen Dipols gegebene Richtung konzentrisch zur Längsachse 3a orientiert ist. Die Ventilstange 3 ist mit dem in Figur 3 nicht dargestellten Ventilteller 101 (siehe **Figur 1**) verbunden, der den Durchfluss durch das Ventil 100 verändert, und sie ist entlang ihrer Längsachse 3a beweglich.

Das Druckmittel D zur Ansteuerung des Ventilantriebes 105 (s. **Figur 1**) zur Erzeugung des Vollhubes H des Ventils 100 wird über die Ventilstangenbohrung 3b, die innerhalb der Ventilstange 3 ausgeführt ist und an deren Ende ausmündet, zugeführt. Das Druckmittel D gelangt in die Ventilstangenbohrung 3b auf dem Weg von einem Zufuhranschluss 16.11 am Gehäuseunterteil 1a über ein zweites Zufuhrkanal-System 16* im Gehäuseunterteil 1a, eine Zufuhrkanal-Verbindungsstelle 16.12, einen ersten Zufuhrkanal-Abschnitt 16a eines Zufuhrkanal-Systems 16 im Installationsblock 2, das in Figur 3 nicht dargestellte erste Pilotventil 9 (z.B. elektromagnetisch betätigbares Ventil; s. hierzu **Figur 5**), einen ersten Druckmittelkanal-Abschnitt 17a und schließlich über einen in der mantelseitigen Wandung des Kammergehäuses 2a verlaufenden, als nutförmige Ausnehmung ausgebildeten vierten Druckmittelkanal-Abschnitt 17d in den Innenraum des Kammergehäuses 2a. Die Abfuhr des Druckmittels D aus dem Ventilantrieb 105 zur Erzeugung des Vollhubes H des Ventils 100 gelangt auf umgekehrtem Weg zurück in den ersten Druckmittelkanal-Abschnitt 17a, um von dort über das erste Pilotventil 9 und einen sich anschließenden ersten Abfuhrkanal-Abschnitt 18a einem Abfuhrkanal-System 18 innerhalb des Installationsblockes 2 zugeführt zu werden.

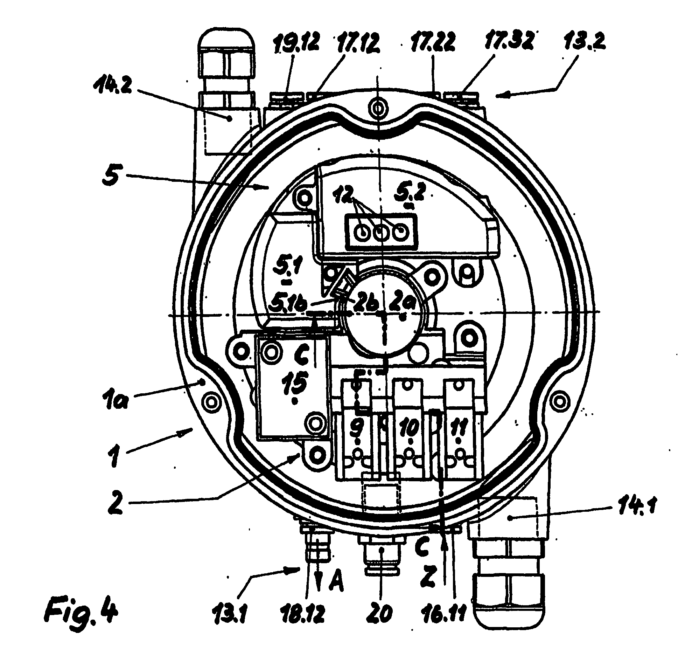

Auf dem mit dem Gehäuseunterteil 1a verbundenden Installationsblock 2 des Steuerkopfes 1 (**Figuren 4** **und** **5**) sind die drei Pilotventile 9, 10 und 11 angeordnet, wobei das erste Pilotventil 9 den Vollhub H des Ventils 100, das zweite Pilotventil 10 einen ersten Teilhub (erster Lifthub zur Sitzreinigung der ersten Sitzfläche 103 des Ventils 100, falls dieses als Doppelsitzventil ausgebildet ist) und das dritte Pilotventil 11 einen zweiten Teilhub (zweiter Lifthub zur Sitzreinigung der zweiten Sitzfläche 104 des vorgenannten Doppelsitzventils 100) ansteuert. Neben den drei Pilotventilen 9 bis 11 befindet sich auf dem Installationsblock 2 das sog. NICHT-Element 15, das für die Steuerung des Druckmittels D zur rückwärtigen Beaufschlagung des Hauptkolbens 105a zuständig ist. Die rückwärtige Beaufschlagung dient der Erzeugung einer Zusatzkraft, die eine erhöhte Schließkraft des Ventils 100 sicherstellt. Es ist weiterhin jeweils eine am Gehäuseunterteil 1a angeordnete, aus drei Anschlüssen bestehende erste Gruppe Druckmittelanschlüsse 13.1 gezeigt, von denen der Zufuhranschluss 16.11 in **Figur 3** bereits erwähnt wurde. Der zweite Anschluss ist ein Abfuhrkanal-Anschluss 18.12, in dem das bereits erwähnte Abfuhrkanal-System 18, das sich innerhalb eines zugeordneten, nicht dargestellten Abfuhrkanal-Systems im Gehäuseunterteil 1a fortsetzt, endet. Ein Rückschtagventil-Anschluss 20 bildet den dritten Anschluss. Weiterhin sind ein erster und ein zweiter Anschluss für Steuer- und Signalverarbeitungsleitungen 14.1 bzw. 14.2 vorgesehen (u.a. Versorgungsspannung, Pilotventilsignale, Rückmeldesignale, externe Sensoren). Über die erste Gruppe Druckmittelanschlüsse 13.1 wird der Installationsblock 2 mit von außen an den Steuerkopf 1 herangeführten Druckmittelleitungen verbunden. Ein Verbindungselement 22 stellt eine Verbindung zwischen dem Steuerkopf 1 und dem darunter befindlichen Ventilantrieb 105 her.

Die Sensoreinheit 5.1 besitzt an ihrem oberen Ende eine schwalbenschwanzförmige Befestigungsnut 5.1b (**Figur 4**), in die ein komplementäres Befestigungsteil 2b am oberen Ende des Kammergehäuses 2a zum Zwecke einer formschlüssigen Befestigung eingreift. Die Kommunikationseinheit 5.2 ist wiederum an der Sensoreinheit 5.1 befestigt; zusammen bilden beide den Stellungsmelder 5. Am oberen Ende der Kommunikationseinheit 5.2 sind drei Leuchtmelder 12 vorgesehen, über denen eine in der Abdeckhaube 21 integrierte Streulinse 2 a angeordnet ist. Die Leuchtmelder 12 haben unterschiedliche Farben (beispielsweise rot, grün und gelb), sie können Dauer- oder Blinklicht aussenden und ihre Anordnung ist im Zusammenwirken mit der Streulichtlinse 21a so getroffen, dass sämtliche Leuchtmelder 12 im Umkreis des Steuerkopfes 1 aus allen Richtungen erkennbar sind.

Vier Anschlüsse einer zweiten Gruppe Druckmittelanschlüsse 13.2 (**Figur 4**) auf der gegenüberliegenden Seite des Steuerkopfes 1 dienen ebenfalls dem Anschluss von außen an den Steuerkopf 1 herangeführten Druckmittetleitungen.

Über einen ersten Druckmittelkanal-Anschluss 17.12 wird dem ersten Liftkolben 105b (**Figur 1**) zur Erzeugung des ersten Teilhubes (erster Lifthub) Druckmittel D zugeführt. Ein zweiter Druckmittelkanal-Anschluss 17.22 versorgt den zweiten Liftkolben 105c zur Erzeugung des zweiten Teilhubes (zweiter Lifthub) ebenfalls mit Druckmittel D. Über einen dritten Druckmittelkanal-Anschluss 17.32 kann alternativ zur in den **Figuren 1** und **3** beschriebenen internen Zufuhr des Druckmittels D auf dem Weg über die Ventilstange 3 zum Hauptkolben 105a diese Zufuhr extern erfolgen, d.h. der Hauptkolben 105a wird über einen von dem vorg. dritten Druckmittel-Anschluss 17.32 abgehenden Schlauch von außen (erster Druckmittelanschluss 106a) mit Druckmittel D versorgt. Über einen vierten Druckmittel-Anschluss 19.12 wird, gesteuert über das NICHT-Element 15, Druckmittel D auf die Rückseite des Hauptkolbens 105a geleitet.

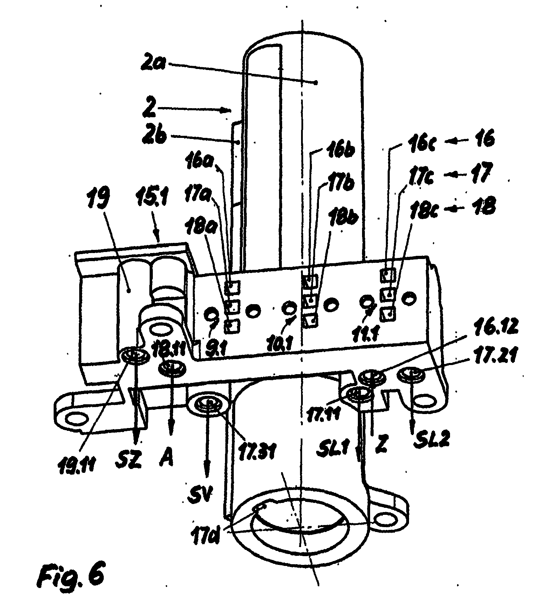

Zum Anschluss der Pilotventile 9 bis 11 sind am Installationsblock 2 jeweils entsprechende Anschlüsse 9.1, 10.1 und 11.1 vorgesehen (**Figur 6**). An jede dieser Anschlussstellen 9.1 bis 11.1 ist jeweils der erste Zufuhrkanal-Abschnitt 16a bzw. ein zweiter Zufuhrkanal-Abschnitt 16b bzw. ein dritter Zufuhrkanal-Abschnitt 16c des Zufuhrkanal-Systems 16 (**Figur 3**) herangeführt. Vom ersten Anschluss 9.1 führt der erste Druckmittelkanal-Abschnitt 17a eines im Gehäuseunterteil 1a angeordneten, nicht dargestellten Druckmittel-Systems auf dem Weg über den vierten Druckmittelkanal-Abschnitt 17d in den Innenraum des Kammergehäuses 2a (s. **Figur 3**). Ein zweiter Druckmittelkanal-Abschnitt 17b verläuft vom zweiten Anschluss 10.1 über den Installationsblock 2 in den Ventilantrieb 105 zur Ansteuerung des ersten Lifthubes. In gleicher Weise verläuft ein dritter Druckmittelkanal-Abschnitt 17c vom dritten Anschluss 11.1 in den zugeordneten Ventilantrieb 105 für den zweiten Lifthub. Der erste Abfuhrkanal-Abschnitt 18a (s. auch **Figur 3**) mündet im ersten Anschluss 9.1 aus. Ein zweiter und ein dritter Abfuhrkanal-Abschnitt 18b, 18c führt jeweils zum zweiten bzw. dritten Anschluss 10.1, 11.1. Das NICHT-Element 15 ist auf einem vierten Anschluss 15.1 (**Figur 6**) am Installationsblock 2 angeordnet.

Der vierte Druckmittelkanal-Abschnitt 17d (s. **Figur 3**) und damit der Innenraum des Kammergehäuses 2a sind über einen nicht dargestellten weiteren Druckmittelkanal-Abschnitt mit dem NICHT-Element 15 verbunden. Ein im Installationsblock 2 angeordnetes, jedoch nicht dargestelltes Kanal-Systems für zusätzliches Druckmittel D versorgt, ausgehend vom vorstehend genannten vierten Anschluss 15.1 des NICHT-Elementes 15, die Rückseite des Hauptkolbens 105 für den Vollhub H des Ventils 100 mit entsprechendem Druckmittel. Letzteres wird dem NICHT-Element 15 über das Zufuhrkanal-Systems 16 zugeführt.

Das Zufuhrkanal-System 16 innerhalb des Installationsblockes 2 ist an der in **Figur 3** bereits dargestellten Zufuhrkanal-Verbindungstelle 16.12 (Druckmittel-Zufuhr Z) mit dem zugeordneten zweiten Zufuhrkanal-System 16* im Gehäuseunterteil 1a mittels eines nicht dargestellten Dichtringes dichtend verbunden (Figur 6). In gleicher Weise ist ein erstes Druckmittelkanal-System 17 im Installationsblock 2 über eine erste Druckmittel-Verbindungsstelle 17.11 (Druckmittel für ersten Lifthub SL1) oder eine zweite Druckmittel-Verbindungsstelle 17.21 (Druckmittel für zweiten Lifthub SL2) oder eine dritte Druckmittel-Verbindungsstelle 17.31 (externe Ansteuerung des Ventilantriebs 105 für den Vollhub H mit dem Druckmittel SV) mit dem zugeordneten, nicht dargestellten Druckmittelkanal-System im Gehäuseunterteil 1a dichtend verbunden. Entsprechend werden auch das Abfuhrkanal-System 18 über eine Abfuhrkanal-Verbindungsstelle 18.11 (Druckmittel-Abfuhr A) und ein nicht dargestelltes zweites Druckmittelkanal-System 19 für zusätzliches Druckmittel über eine vierte Druckmittel-Verbindungsstelle 19.11 (Druckmittel für Zusatzbelastung SZ) mit den entsprechenden Systemen im Gehäuseunterteil 1a jeweils dichtend verbunden.

## Patentansprüche

1. Verfahren zur Steuerung der Schaltbewegung eines Ventils, das wenigstens eine ein Schließglied tragende, translatorisch bewegte Ventilstange aufweist, bei dem die Ventilstange(n) mittels eines druckmittelbeaufschlagten Antriebes in zwei einen Vollhub (H) ergebende Endstellungen verbracht wird/werden, bei dem erforderlichenfalls wenigstens eine Ventilstange in eine zwischen diesen Endstellungen positionierte, eine Teiloffenstellung des Schließgliedes bildende Zwischenstellung verbracht wird, bei dem die die Ventitstangenbewegung abbildende aktuelle Stellung der Ventilstange über einen Stellungsmelder in Bezug auf ein festgelegtes Bezugssystem fortlaufend erfasst und die Stellungsmeldungen (y) hierzu fortlaufend gespeichert werden, und dass ein Vergleich vorgesehen ist zwischen diesen aktuell gewonnenen Daten und solchen, die vor der ersten Schaltbewegung des Ventils gespeichert wurden,
**dadurch gekennzeichnet,**
• **dass** die beiden Endstellungen und die Zwischenstellung(en) jeweils durch unmittelbare oder mittelbare Anlage der Ventilstange(n) an festen metallischen Stellungsbegrenzungen (A1, A2, A3, A4) eindeutig bestimmt sind,
• **dass** im Zuge der erstmaligen Schaltbewegungen des Ventils die festen Stetlungsbegrenzungen (A1, A2, ...) jeweils angefahren und die hieraus jeweils resultierenden festen Stellungsmeldungen (y₁, y₂, y₃, y₄) gespeichert werden,
• **dass** den festen Stellungsmeldungen (y₁, y₂, ...) jeweils ein vorgegebener Toleranzbereich (ΔT₁ᵢ, ΔT₂ᵢ, ΔT₃ᵢ, ΔT₄ᵢ) zugewiesen wird und daraus die beiden Grenzwerte (y₁ₒ, y₁ᵤ; y₂ₒ, y₂ᵤ; y₃ₒ, y₃ᵤ; y₄ₒ, y₄ᵤ) des jeweiligen Toleranzbereichs (ΔT₁ᵢ, ΔT₂ᵢ, ...) berechnet werden,
• **dass** während der nachfolgenden Schaltbewegungen des Ventils eine den aktuellen Endstellungen und/oder der/den aktuellen Zwischenstellung(en) jeweils zugeordnete aktuelle feste Stellungsmeldung (y₁*, y₂*, y₃*, y₄*) herangezogen und mit den beiden Grenzwerten (y₁ₒ, y₁ᵤ; y₂ₒ, y₂ᵤ; ...) des in Frage kommenden Toleranzbereichs (ΔT₁ᵢ, ΔT₂ᵢ, ...) verglichen werden/wird,
• und **dass** bei Annäherung der aktuellen festen Stellungsmeldungen (y₁*, y₂*, y₃*, y₄*) an die zugeordneten Grenzwerte (y₁ₒ, y₁ᵤ; y₂ₒ, y₂ᵤ; ...) und/oder beim Verlassen des zugeordneten Toleranzbereichs (ΔT₁ᵢ, ΔT₂ᵢ, ...) ein Schalt- und/oder Meldesignal generiert werden/wird.

2. Verfahren nach Anspruch 1, **dadurch gekennzeichnet, dass** die vor der erstmaligen Schaltbewegung des Ventils gespeicherten Daten einem in der Steuerung hinterlegten Datensatz (DS) entnommen werden, der die jeweilige Ventilkonfiguration, deren Schaltbewegungen und Schaltalgorithmus kennzeichnet und überwacht.

3. Verfahren nach Anspruch 2, **dadurch gekennzeichnet, dass** im Datensatz (DS) Toleranzbereiche (ΔT₁ᵢ, ΔT₂ᵢ, ΔT₃ᵢ, ΔT₄ᵢ) unterschiedlicher Gütegrade (i = 1, 2, 3, ...) enthalten sind, wobei jeder Gütegrad (i) eine Toleranzbereichgruppe (ΔT₁₁, ΔT₂₁, ΔT₃₁, ΔT₄₁; ΔT₁₂, ΔT₂₂, ΔT₃₂, ΔT₄₂; ΔT₁₃, ΔT₂₃, ...; ΔT₁₄, ΔT₂₄, ...) umfasst.

4. Verfahren nach Anspruch 3, **dadurch gekennzeichnet, dass** den festen Stellungsmeldungen (y₁, y₂, y₃, y₄) eine Toleranzbereichgruppe zugeordnet ist.

5. Verfahren nach Anspruch 3, **dadurch gekennzeichnet, dass** den festen Stellungsmeldungen (y₁, y₂, y₃, y₄) jeweils Toleranzbereiche unterschiedlicher Gütegrade (i) zugeordnet sind.

6. Verfahren nach einem der Ansprüche 1 bis 5, **dadurch gekennzeichnet, dass** der Toleranzbereich (ΔT₁ᵢ, ΔT₂ᵢ, ΔT₃ᵢ, ΔT₄ᵢ) asymmetrisch und zugunsten einer wahrscheinlichsten Veränderung der zugeordneten festen Stellungsmeldung (y₁, y₂, y₃, y₄) letzterer angeordnet ist (y₁ₒ = y₁ + ϕΔT₁ᵢ, y₁ᵤ = y₁-[1-ϕ]ΔT₁ᵢ, mit Anteilsfaktor ϕ, wobei 0 ≤ ϕ ≤ 1; ...).

7. Verfahren nach einem der Ansprüche 1 bis 6, **dadurch gekennzeichnet, dass** der Toleranzbereich (ΔT₁ᵢ, ΔT₂ᵢ, ΔT₃ᵢ, ΔT₄ᵢ) symmetrisch zur zugeordneten festen Stellungsmeldung (y₁, y₂, y₃, y₄) angeordnet ist (y₁ₒ = y₁ + ΔT₁ᵢ/ 2; y₁ᵤ = y₁ - ΔT₁ᵢ/2; ..., wobei ϕ = 0,5 ist).

8. Verfahren nach einem der Ansprüche 1 bis 7, **dadurch gekennzeichnet, dass** bei Annäherung der aktuellen festen Stellungsmeldungen (y₁*, y₂*, y₃*, y₄*) an die zugeordneten Grenzwerte (y₁ₒ, y₁ᵤ; y₂ₒ, y₂ᵤ; ...) des Toleranzbereichs (ΔT₁ᵢ, ΔT₂ᵢ, ΔT₃ᵢ, ΔT₄ᵢ) ein Wartungssignal generiert wird, wobei die Annäherung jeweils durch eine Annäherungstoleranz (Δt_{w}) definiert ist, die an die jeweiligen Grenzwerte (y₁ₒ, y₁ᵤ; y₂ₒ, y₂ᵤ; ...) anschließt.

9. Vorrichtung zur Durchführung des Verfahrens nach einem der Ansprüche 1 bis 8, bestehend aus
• einem Ventil (100) mit wenigstens einer ein Schließgtied (101; 102) tragenden, translatorisch bewegten Ventilstange (3, 101a; 102a),
• einem druckmittelbeaufschlagten Ventilantrieb (105) für die Ventilstange(n) (3, 101a; 102a).
• Mitteln zur Steuerung des Druckmittels für den Ventilantrieb (105),
• einem Stellungsmelder (5), der an die Ventilstange (3, 101a) angeschlossen ist und der die die Ventilstangenbewegung abbildende aktuelle Stellung der Ventilstange (3, 101a) in Bezug auf ein festgelegtes Bezugssystem fortlaufend erfasst und diesbezügliche aktuelle Stellungsmeldungen (y) liefert,
• Mitteln zur fortlaufenden Speicherung der aktuellen Stellungsmeldungen (y) und
• Mitteln zur Berechnung und zum Vergleich von Daten aus vor der erstmaligen Schaltbewegung des Ventils - vorgegebenen Daten und/oder im Zuge der Ventilbewegungen erfassten Daten,
• dass zwei einen Vollhub (H) ergebende Endstellungen (y₁, y₂) der Ventilstange (3, 101a) jeweils durch unmittelbare oder mittelbare Anlage der Ventilstange an festen metallischen Stellungsbegrenzungen (A1, A2) eindeutig bestimmt sind,
• und dass sämtliche zur Steuerung des Ventils (100) notwendigen Mittel in einem Steuerkopf (1) angeordnet sind, der an der dem Ventil (100) abgewandten Seite des Ventilantriebes (105) vorgesehen ist,
**dadurch gekennzeichnet, daß** die Vorrichtung derart ausgebildet ist,
• dass jeweils eine Zwischenstellung (y₃, y₄) der Ventilstange(n) (3, 101a; 102a) zwischen den Endstellungen (y₁, y₂) zur Bildung einer Teiloffenstellung des jeweiligen Schließgliedes (101, 102) durch unmittelbare oder mittelbare Anlage der Ventilstange(n) an festen metallischen Stellungsbegrenzungen (A3, A4) eindeutig bestimmt sind, und
• dass der Stellungsmelder (5) als berührungsfrei arbeitende Positionsanzeigevorrichtung ausgebildet ist, der in einer Sensoreinheit (5.1) eine Anzahl ortsfester Magnetfeldwandler (5.1a) in einer Reihenanordnung parallel und in Nachbarschaft zu einer zu erfassenden Ventilstangenbewegung aufweist, und dass, verbunden mit der Ventilstange (3), ein Magnet (4) entlang der Feldwandler (5.1a) verschiebbar ist.

10. Vorrichtung nach Anspruch 9, **dadurch gekennzeichnet, dass** im Steuerkopf (1) ein Installationsblock (2) vorgesehen ist, der das gesamte Verteilungssystem für das Druckmittel in sich aufnimmt sowie die Pilotventile (9, 10, 11, 15) zur Steuerung des Druckmittels und den aus der Sensoreinheit (5.1) und einer Kommunikationseinheit (5.2) bestehenden Stellungsmelder (5) trägt.

11. Vorrichtung nach Anspruch 10, **dadurch gekennzeichnet, dass** der Installationsblock (2) für die höchste Ausbaustufe der Steuerung eines Ventils (100), d.h. Ansteuerung der beiden Endstellungen und jeweils der Zwischenstellung des Ventil- und Doppeltellers ausgeführt ist und dass der Ausbau modular erfolgt.

12. Vorrichtung nach einem der Ansprüche 9 bis 11, **dadurch gekennzeichnet, dass** das Druckmittel zurAnsteuerung des Ventilantriebes (105) zur Erzeugung des Vollhubes (H) über eine Ventilstangenbohrung (3b) in der Ventilstange (3) geführt ist.

13. Vorrichtung nach einem der Ansprüche 9 bis 11, **dadurch gekennzeichnet, dass** das Druckmittel zur Ansteuerung des Ventilantriebes (105) zur Erzeugung des Vollhubes (H) dem Ventilantrieb (105) von außen über einen ersten Druckmittelanschluss (106a) zugeführt wird.

14. Vorrichtung nach einem der Ansprüche 9 bis 13, **dadurch gekennzeichnet, dass** der Ventilantrieb (105) einen vierten Druckmittelanschluss (106d) aufweist, über den in der Schließstellung des Ventils (100) die Schließkraft auf die Ventilstange (3, 101a) durch Zufuhr von Druckmittel erhöht wird.

15. Vorrichtung nach einem der Ansprüche 9 bis 14, **dadurch gekennzeichnet, dass** der Stellungsmelder (5) mit mehr als einem Leuchtmelder (12) unterschiedlicher Farbgebung ausgestattet ist, wobei die Leuchtmelder (12) über eine Streulichtlinse (21a), die in der geschlossenen Stirnseite einer den Steuerkopf (1) verschließenden Abdeckhaube (21) angeordnet ist, rundum, d.h. 360 Grad sichtbar sind.

## Claims

1. Method for controlling the switching movement of a valve comprising at least one translatory moveable valve rod carrying a closure member, wherein said valve rod(s) is/are brought to two final positions resulting in a complete stroke (H) by means of an actuator acted upon by pressure medium, wherein, if required, at least one valve rod is brought into an intermediate position forming a partially open position of the closure member located between those final positions, wherein the actual position of the valve rod illustrating the valve rod movement is continuously detected through a position indicator with reference to a set reference system and the position information (y) hereto is continuously stored, and that a comparison is provided between these actually obtained data and such, which have been stored before the first switching movement of the valve,
**characterised in that**
• the two final positions and the intermediate position(s) are each definitely determined by the direct or indirect abutment of the valve rod(s) against fixed metallic position stops (A1, A2, A3, A4),
• in the course of the first switching movements of the valves, it is driven up to each of the fixed position
• stops (A1, A2, ...) and the respective position information ((y1, y2, y3, y4) resulting therefrom is stored,
• the fixed position information ((y₁, y₂, ... ) is respectively associated with a predetermined range of tolerance (ΔT₁ᵢ, ΔT₂ᵢ, ΔT₃ᵢ, ΔT₄ᵢ) and the two threshold values (y₁₀, y₁ᵤ; y₂₀, y₂ᵤ, y₃₀, y₃ᵤ; y₄₀, y₄ᵤ) of the respective range of tolerance (ΔT₁ᵢ, ΔT₂ᵢ,...) are calculated therefrom,
• during the following switching movements of the valve the actual position information (Y_{1*}, y_{2*}, Y_{3*}, Y_{4*}) respectively associated with the actual final positions and/or the actual intermediate position(s) is taken and compared with the two threshold values (Y₁ₒ, Ylu; Y₂₀, Y₂ᵤ; ... ) of the possible range of tolerance (ΔT₁ᵢ, ΔT₂ᵢ,...) and
• a switching and/or notification signal is/are generated, if the actual fixed position information (Y_{1*}, Y_{2*}, Y_{3*}, Y_{4*}) approaches the associated threshold values (y₁₀, y₁ᵤ; y₂₀, y₂ᵤ... ) and/or if the associated range of tolerance ΔT₁ᵢ, ΔT_{2i,.}.. ) is left.

2. Method according to claim 1, **characterised in that** the data stored before the first switching movement of the valve is restored from a data record (DS) filed in the control, which characterises and monitors the respective valve configuration, the switching movement and the switching algorithm thereof.

3. Method according to claim 2, **characterised in that** the data record (D5) includes ranges of tolerance (ΔT₁ᵢ, ΔT₂ᵢ, ΔT₃ᵢ, ΔT₄ᵢ) of different quality factors (i = 1, 2, 3 ... ), each quality factor (i) comprising a tolerance range group (ΔT₁₁ ΔT₂₁, ΔT₃₁, ΔT₄₁, ΔT₁₂, ΔT₂₂, ΔT₃₂ ΔT₄₂, ΔT₁₃, ΔT₂₃; ΔT₁₄, ΔT_{24,} ...).

4. Method according to claims 3, **characterised in that** the fixed position information (y₁, y₂, y₃, y₄) is associated with a tolerance range group.

5. Method according to claims 3, **characterised in that** the fixed position information (y₁, y₂, y₃, y₄) is associated with respective ranges of tolerances of different quality factors (i).

6. Method according to one of the claims 1 to 5, **characterised in that** the range of tolerance (ΔT₁ᵢ, ΔT₂ᵢ, ΔT₃ᵢ, ΔT₄ᵢ) is arranged asymmetrically and in favour of a most probable variation of the associated fixed position information (y₁, y₂, y₃, y₄) of the latter (y₁₀ = y₁ + ϕ ΔT₁ᵢ, y₁ᵤ = y₁ - [1-ϕ) ΔT₁ᵢ with percentage factor ϕ, wherein 0 ≤ ϕ ≤ 1; ....).

7. Method according to one of the claims 1 to 6, **characterised in that** the range of tolerance (ΔT₁ᵢ, ΔT₂ᵢ, ΔT₃ᵢ, ΔT₄ᵢ) is arranged symmetrically to the associated fixed position information (y₁, y₂, y₃, y₄)(y₁₀ = y₁ + ΔT₁ᵢ/2; y₁ᵤ = y₁ - ΔT₁ᵢ/2 ; ..., wherein ϕ =0,5).

8. Method according to one of the claims 1 to 7, **characterised in that** a maintenance signal is generated, if the actual fixed position information (Y_{1*}, y_{2*}, Y_{3*}, Y_{4*}) approaches the associated threshold values (Y₁ₒ, Y₁ᵤ; Y₂₀, Y₂ᵤ; ... ) of the range of tolerance {(ΔT₁ᵢ, ΔT₂ᵢ, ΔT₃ᵢ, ΔT₄ᵢ), said approaching being respectively defined by an approaching tolerance (ΔT_{w}), which follows the respective threshold values (Y₁ₒ, Y₁ᵤ; Y₂₀, Y₂ᵤ; ... ).

9. Device for the implementation of the method according to one of the claims 1 to 8, consisting of:
• a valve (100) with at least one tranlatory moveable valve rod (3, 101a, 102a) carrying a closure member (101, 102),
• a valve actuator (105) acted upon by pressure medium for the valve rod (s) (3, 101a, 102a),
• means for controlling the pressure medium for the valve actuator (105),
• a position indicator (5) connected to the valve rod (3, 101a) and continuously detecting the actual position of the valve rod (3, 101a) illustrating the movement of the valve rod with reference to a set reference system and providing actual position information (Y) about this,
• means for the continuous storing of the actual position information (y) and
• means for calculating and comparing the data given from the first switching movement of the valve and/or data detected in the course of the valve movements,
• that two final positions (Y₁, Y₂) of the valve rod (3, 101a) resulting in a complete stroke (H) are definitely determined by direct or indirect abutment of the valve rod against fixed metallic position stops (A1, A2),
• and that all means required for the controlling of the valve (100) are arranged in a control head (1) provided at the side of the valve actuator (105) facing away from the valve (100),
**characterised in that** the device is formed such
• that respectively one intermediate position (y₃, y₄) of the valve rod(s) (3, 101a; 102a) between the final positions (Y₁, y₂) to form a partially open position of the respective closure member (101, 102) is definitely determined by direct or indirect abutment of the valve rod(s) against fixed position stops (A3, A4), and
• that the position indicator (5) is formed as a position indicator working free of contact, which comprises a number of stationary magnetic field transformers (5.la) in a sensor unit (5.1) in a series arrangement in parallel and adjacent to a valve rod movement to be detected, and that, connected with the valve rod (3), a magnet (4) is displaceable along the field transformer (5.1a).

10. Device according to claim 9, **characterised in that** an installation block (2) is provided in the control head (I), in which the complete distribution system for the pressure means is accommodated as well as pilot valves (9, 10, 11, 15) for controlling the pressure means, and which carries the position indicator (5) consisting of the sensor unit (S.1) and a communication unit (5.2).

11. Device according to claim 10, **characterised in that** the installation block (2) is adapted for the highest stage of extension of the control of the valve (loo), i. e. driving of both final positions and each intermediate position of of the valve and double disk, and that the extension occurs in modular manner.

12. Device according to one of the claims 9 to 11, **characterised in that** the pressure medium for driving the valve actuator (105) for the generation of the complete stroke (H) is guided through a valve rod bore (3b) in the val ve rod (3).

13. Device according to one of the claims 9 to 11, **characterised in that** the pressure medium for driving the valve actuator (105) for the generation of the complete stroke (H) is supplied to the valve actuator (105) from the outside through a first pressure medium connection (106a).

14. Device according to one of the cl aims 9 to 13, **characterised in that** the valve actuator (105) comprises a fourth pressure medium connection (106d), through which in the closed position of the valve (100) the closing force onto the valve rod (3, 101a) is increase by supply of pressure medium.

15. Device according to one of the claims 9 to 14, **characterised in that** the position indicator (5) is equipped with more than one signal lamp (12) of different colouring, said signal lamps (12) being visible all around, i. e. 360 degrees, through a dispersion lens (21a) arranged in the closed front side of a covering hood (21) closing the control head (1).

## Revendications

1. Procédé de commande de l'opération de déplacement d'une soupape qui comporte au moins une bielle de soupape se déplaçant dans un mouvement translatoire et portant un organe de fermeture, dans lequel la/les bielle(s) de soupape est/sont amenée(s) dans deux positions extrêmes donnant une course complète (H) à l'aide d'un entrainement chargé par moyen de pression, dans lequel au moins une bielle de soupape est amenée si nécessaire dans une position intermédiaire positionnée entre ces deux positions extrêmes et formant une position d'ouverture partielle de l'organe de fermeture, dans·lequel la position actuelle de la bielle de soupape représentant le mouvement de la bielle de soupape est saisie en permanence par un contrôle de position par rapport àun système de référence défini et dans lequel les informations sur la position (y) sont enregistrées à cet effet en continu, et dans lequel une comparaison est prévue entre ces données actuellement collectées et celles qui ont été enregistrées avant la première opération de déplacement de la soupape,
**caractérisé en ce que**
- les deux positions extrêmes et la/les position(s) intermédiaire(s) sont déterminées clairement respectivement par la disposition directe ou indirecte de la/des bielle(s) de soupape sur des butées métalliques de délimitation fixes de la position (AI, A2, A3, A4), que
- au cours des premières opérations de déplacement de la soupape, les butées de délimitation fixes de la position (AI, A2, ....) sont respectivement mises en mouvement et que les informations fixes sur la position en résultant respectivement (y₁, y₂, y₃, y₄) sont enregistrées, que
- une plage de tolérance prédéfinie (ΔT₁ᵢ, ΔT₂ᵢ, ΔT₃ᵢ, ΔT₄ᵢ) est assignée respectivement aux informations fixes sur la position (y₁, y₂ ... ) et que les deux valeurs seuil (y₁₀, y₁ᵤ, Y₂₀, Y₂ᵤ, Y₃₀, Y₃ᵤ, Y₄₀, Y₄ᵤ) de la plage de tolérance respective (ΔT₁ᵢ, ΔT₂ᵢ, ...) sont calculées à partir de cela, que
- pendant les opérations de déplacement suivantes de la soupape, on utilise une information (y₁*, y₂*, y₃*, y₄*) sur la position fixe, actuelle et respectivement associée aux positions extrêmes actuelles et/ou à la/aux position{s) intermédiaire{s) actuelle{s) et on la/les compare aux deux valeurs seuil (y₁₀, y₁ᵤ ; y₂₀, y₂ᵤ, ...) de la plage de tolérance en question (ΔT₁ᵢ, ΔT₂ᵢ,...) et **en ce que**
- un signal de commutation et/ou un signal d'état est/sont généré{s) en cas de rapprochement des informations fixes et actuelles sur la position (y₁*, y₂*, y₃*, y₄*) par rapport aux valeurs seuil associées (y₁₀, y₁ᵤ ; y₂₀, y₂ᵤ, ...) et/ou lorsqu'elles sortent de la plage de tolérance associée (ΔT₁ᵢ, ΔT₂ᵢ,....).

2. Procédé selon la revendication 1, **caractérisé en ce que** les données enregistrées avant la première opération de déplacement de la soupape sont extraites d'un article (DS) enregistré dans la commande et qui caractérise et contrôle la configuration respective de la soupape, ses opérations de déplacement et son algorithme de commutation.

3. Procédé selon la revendication 2, **caractérisé en ce que** des plages de tolérance (ΔT₁ᵢ, ΔT₂ᵢ, ΔT₃ᵢ, ΔT₄ᵢ) de divers rendements (i = 1, 2, 3,...) sont comprises dans l'article (D5), chaque rendement (i) comprenant un groupe de plages de tolérance (ΔT₁₁ ΔT₂₁, ΔT₃₁, ΔT₄₁, ΔT₁₂, ΔT₂₂, ΔT₃₂ ΔT₄₂, ΔT₁₃, ΔT₂₃, ......; ΔT₁₄, ΔT₂₄, ...).

4. Procédé selon la revendication 3, **caractérisé en ce qu'**un groupe de plages de tolérance est associé aux informations fixes sur la position (y₁, y₂, y₃, y₄).

5. Procédé selon la revendication 3, **caractérisé en ce que** des plages de tolérance de différents rendements (i) sont associées respectivement aux informations fixes sur la position (y₁, y₂, y₃, y₄).

6. Procédé selon l'une des revendications 1 à 5, **caractérisé en ce que** la plage de tolérance (ΔT₁ᵢ, ΔT₂ᵢ, ΔT₃ᵢ, ΔT₄ᵢ) est disposée de manière asymétrique et au profit d'une modification la plus vraisemblable de l'information fixe sur la position associée (y₁, y₂, y₃, y₄) de cette dernière (y₁₀ = y₁ + (ϕΔT₁ᵢ,y₁ᵤ = y₁ - [1 ϕ) ΔT₁ᵢ avec un facteur de proportion ϕ, avec 0 < ϕ < 1 ; ... ).

7. Procédé selon l'une quelconque des revendications 1 à 6, **caractérisé en ce que** la plage de tolérance (DT₁ᵢ, DT₂ᵢ, DT₃ᵢ, DT₄ᵢ) est disposée de manière symétrique par rapport à l'information fixe (y₁, y₂, y₃, y₄) sur la position associée (Y₁₀ = Y₁ + ΔT₁ᵢ/2 ; y₁ᵤ = y₁ - ΔT₁ᵢ/2 ;... , avec ϕ=0,5).

8. Procédé selon l'une quelconque des revendications 1 à 7, **caractérisé en ce qu'**un signal de surveillance est généré en cas de rapprochement des informations fixes et actuelles sur la position (y₁*, y₂*, y₃*, y₄*) avec les valeurs seuil associées (y₁₀, y₁ᵤ ; y₂₀, y₂ᵤ... ) de la plage de tolérance (ΔT₁ᵢ, ΔT₂ᵢ, ΔT₃ᵢ, ΔT₄ᵢ), l'approximation étant définie par une tolérance de rapprochement (Δt_{w}) reliée aux valeurs seuil respectives (y₁ₒ, y₁ᵤ,y₂ₒ, y₂ᵤ,....).

9. Dispositif d'exécution du procédé selon l'une des revendications 1 à 8, composé de
- une soupape (100) avec au moins une bielle de soupape (3, 101a ; 102a) pouvant être déplacée dans un mouvement translatoire et portant un organe de fermeture (101;102),
- un entraînement de soupape (105) actionné par un moyen de pression pour la/les bielle(s) de soupape (3, 101a ; 102a),
- des moyens de commande du moyen de pression pour l'entraînement de soupape (105),
- un contrôleur de position (5) raccordé à la bielle de soupape (3, 101a) qui saisit en permanence la position actuelle de la bielle de soupape (3, 101a) représentant le mouvement de la bielle de soupape par rapport à un système de référence défini et délivre en conséquence les informations actuelles correspondantes sur la position (y),
- des moyens d enregistrement continu des informations actuelles sur la position (y) et
- des moyens de calcul et de comparaison des données à partir des données prédéfinies avant la première opération de déplacement de la soupape et/ou au cours des données enregistrées des mouvements de la soupape,
- deux positions extrêmes (y1, y2) de la bielle de soupape (3, 101a) donnant la course complète (H) sont respectivement déterminées clairement par une disposition directe ou indirecte de la bielle de soupape contre des butées métalliques de délimitation fixes de la position (AI, A2),
- tous les moyens nécessaires pour la commande de la soupape (100) sont disposés dans une tête d'asservissement (1) prévue sur le côté de l'entraînement de la soupape (105) opposé à la soupape (100),
**caractérisé en ce que** le dispositif est conçu de telle sorte que
- respectivement une position intermédiaire (y3, y4) de la/des bielle(s) de soupape (3, 101a, 102a) est déterminée clairement entre les positions extrêmes (y1, y2) pour former une position d'ouverture partielle de l'organe de soupape respectif (101, 102) par la disposition directe ou indirecte de la/des bielle(s) de soupape sur les butées de délimitation fixes de la position (A3, A4) et que
- le contrôleur de position (5) est conçu en tant que dispositif d'affichage de la position fonctionnant sans contact qui présente dans une unité de capteur (5.1) un certain nombre de convertisseurs fixes de champ magnétique (5.1a) dans une disposition en série parallèle et à proximité d'un mouvement à enregistrer de la bielle de soupape et qu'un aimant (4) peut être déplacé le long du convertisseur de champ (5.1a), en association avec la bielle de soupape (3).

10. Dispositif selon la revendication 9, **caractérisé en ce qu'**un module d'installation (2) est prévu dans la tête d'asservissement (1), lequel module d'installation loge l'intégralité du système de répartition pour le moyen de pression ainsi que les soupapes pilotes (9, 10, 11, 15) pour commander le moyen de pression et porte le contrôleur de position (5) composé de l'unité de capteur (5.1) et d'une unité de communication (5.2).

11. Dispositif selon la revendication 10, **caractérisé en ce que** le module d'installation (2) est conçu pour le niveau d'extension maximal de la commande d'une soupape (100), c'est-à-dire pour aller vers les deux positions extrêmes et respectivement de la position intermédiaire de la tête de soupape et du double volet, et **en ce que** l'extension a lieu de manière modulaire.

12. Dispositif selon l'une quelconque des revendications 9 à 11, **caractérisé en ce que** le moyen de pression pour amorcer l'entraînement de la soupape (105) pour générer la course complète (H) est guidé via un alésage de la bielle de soupape (3b) dans la bielle de soupape (3).

13. Dispositif selon l'une quelconque des revendications 9 à 11, **caractérisé en ce que** le moyen de pression pour amorcer l'entraînement de la soupape (105) pour générer la course complète (H) est amené à l'entraînement de soupape (105) par l'extérieur via un premier raccord de moyen de pression (106a).

14. Dispositif selon l'une des revendications 9 à13, **caractérisé en ce que** l'entraînement de soupape (105) comporte un quatrième raccord de moyen de pression (106d) via lequel, en position de fermeture de la soupape (100), la force de fermeture augmente sur la bielle de soupape (3, 101a) par l'amenée du moyen de pression.

15. Dispositif selon l'une quelconque des revendications 9 à 14, **caractérisé en ce que** le contrôle de position (5) est équipé de plus d'un voyant lumineux (12) de différentes couleurs, les voyants lumineux (12) étant visibles tout autour, c'est-à-dire à 360 degrés, via une lentille de lumière diffusée (21a) qui est disposée dans la face frontale fermée d'un couvercle (21) fermant le corps de diffuseur (1).
